# EUROPÄISCHE PATENTSCHRIFT

(11) **EP 4 180 195 B1**
(45) Veröffentlichungstag und Bekanntmachung des Hinweises auf die Patenterteilung: **15.07.2026**
(21) Anmeldenummer: 22207517.8
(22) Anmeldetag: 15.11.2022
(51) Int. Cl.: B28B 1/087, B30B 11/02

(54) **RÜTTELEINRICHTUNG MIT SELBSTEINSTELLENDEN PRALLLEISTEN**
VIBRATING DEVICE WITH SELF-ADJUSTING BARS
DISPOSITIF DE VIBRATION AVEC BARRES À RÉGLAGE AUTOMATIQUE

(30) Priorität: 15.11.2021 DE 102021129740
(43) Veröffentlichungstag der Anmeldung: 17.05.2023
(73) Patentinhaber: HESS Group GmbH, 57299 Burbach-Wahlbach (DE)
(72) Erfinder: HAHS, Ralf, 56470 Bad Marienberg (DE); BERGMANN, Sebastian, 57629 Höchstenbach (DE)
(74) Vertreter: Richly & Ritschel Patentanwälte PartG mbB

(56) Entgegenhaltungen:
- EP-A1- 1 875 996
- CN-A- 104 029 277
- CN-U- 202 448 201
- DE-A1- 102016 004 024

## Beschreibung

Die Erfindung betrifft eine Rütteleinrichtung, insbesondere für eine Betonsteinfertigungsmaschine oder eine Betonsteinfertigungsanlage, mit selbsteinstellenden Prallleisten.

Derartige Rütteleinrichtungen werden zur Verbesserung der Qualität durch Verdichtung von verschiedenen Betonfertigungsprodukten, wie beispielsweise Betonsteinplatten oder Betonsteinblöcken, während des Herstellungsprozesses eingesetzt. Solch eine Rütteleinrichtung weist meist einen dynamisch beweglichen Rütteltisch mit Rütteltischleisten auf, welcher durch Elektromotoren, wie z.B. Servomotoren, und Unwuchtwellen mit Vibrationen beaufschlagt wird. Als Gegenstück zu den Rütteltischleisten sind Prallleisten auf dem Maschinenrahmen der Rütteleinrichtung starr verschraubt. Die Prallleisten können dadurch während der Rüttelbewegung des Rütteltisches keine Bewegungen ausführen und sind je nach Art der Fertigungsunterlage meist zwischen 0 und 1 mm unterhalb der Rütteltischleisten eingestellt. Während des Verdichtungsprozesses bewegen sich nur die Rütteltischleisten zusammen mit dem Rütteltisch in einer Auf- und Abbewegung, sodass die darauf elastisch verspannte Fertigungsunterlage in seiner Abwärtsbewegung auf die Prallleisten aufschlägt.

Derartige Rütteltischeinrichtungen weisen den Nachteil auf, dass die Prallleisten in regelmäßigen Abständen geprüft und nachjustiert werden müssen. Die Nachjustierung und Prüfung der Prallleisten dauert bis zu 3 Stunden Arbeitszeit und erfolgt einhergehend mit teilweiser Demontierung von einzelnen Bauteilen der Rütteltischeinrichtung und/oder der Betonsteinfertigungsmaschine. Der Einstellprozess ist dabei sehr aufwendig gestaltet, da eine vollausgestattete Betonsteinfertigungsmaschine dem Maschinenbediener kaum Platz zum Arbeiten bietet. Daher wird während der Nachjustierung und Prüfung der Prallleisten die gesamte Betonsteinfertigungsmaschine in den Stillstand versetzt und von Hand einzeln in ihren Positionen relativ zu den Rütteltischleisten verändert, um einen ungleichmäßigen Verschleiß der Rütteltischleisten und Prallleisten und somit eine Verschlechterung der Qualität von Betonfertigungsprodukten zu vermeiden.

CN 104 029 277 A offenbart eine Rütteleinrichtung mit einem Rütteltisch, für eine Betonsteinfertigungsmaschine zur Verdichtung eines zu verdichtenden Materials, nach dem Oberbegriff des Anspruchs 1.

Deshalb ist es die Aufgabe der Erfindung, eine Rütteleinrichtung mit selbsteinstellenden Prallleisten zur Verfügung zu stellen, die sich automatisiert und schnell bezüglich der Rüttelleisten nachjustieren.

Diese Aufgabe wird durch eine Rütteleinrichtung mit einem Rütteltisch, für eine Betonsteinfertigungsmaschine zur Verdichtung eines zu verdichtenden Materials nach Anspruch 1 gelöst. Im Wesentlichen ist die Rütteleinrichtung zumindest teilweise elastisch gelagert und auf einem Maschinenrahmen befestigt. Vorzugsweise ist der Rütteltisch mit mehreren Gummipuffern verbunden, welche auf dem Maschinenrahmen befestigt, vorzugsweise aufgeschraubt, sind. Die Rütteleinrichtung ist durch mindestens einen Elektromotor, bevorzugt Servomotor, angetrieben. Vorzugsweise werden die im Rütteltisch verbauten Unwuchtmassen oder Unwuchtwellen durch mindestens einen Elektromotor angetrieben. Der Rütteltisch ist dabei in eine vorwiegend senkrechte Rüttelbewegung versetzbar. Vorzugsweise werden die Unwuchtmassen oder Unwuchtwellen durch den Servomotor in Rotation versetzt, wobei der Rütteltisch dadurch eine vorwiegend senkrechte Auf- und Abbewegung ausführt. Durch die Änderung der Drehzahl und/oder der Winkeleinstellung zwischen den Unwuchtmassen ist die Amplitude des Rütteltisches während der Rüttelbewegung vorzugsweise modulierbar. Die derartige Rütteleinrichtung weist mehrere parallel zueinander angeordneten am Rütteltisch befestigten Rütteltischleisten und am Maschinenrahmen statisch befestigten Prallleisten auf. Erfindungsgemäß sind sämtliche Prallleisten relativ zu den Rütteltischleisten und entlang einer zur senkrechten Rüttelbewegung parallel verlaufenden Verschiebeachse durch mehrere miteinander verbundene Antriebseinheiten angetriebene Verstelleinrichtungen verschiebbar, um eine Verschiebung sämtlicher Prallleisten zu erhalten. Eine solche Verschiebung der Prallleisten kann grundsätzlich synchron oder asynchron erfolgen.

Durch das wesentliche Merkmal, das Verschieben von Prallleisten in ihrer Höhe relativ zu Rütteltischleisten mit Verstelleinrichtungen, wobei sämtliche Verstelleinrichtungen von Antriebseinheiten in Bewegung entlang der Verschiebeachse angetrieben werden, kann erreicht werden, dass eine automatische Einstellung bzw. Nachjustierung von Prallleisten einer derartigen Rütteleinrichtung möglich ist. Erfindungsgemäß wird jede Prallleiste einzeln von einer eigener Antriebseinheit angetrieben, sodass jede Verstelleinrichtung einzeln ansteuerbar und/oder motorisiert ist. So kann während der automatischen Prallleisteneinstellung die Einstellzeit bis auf ein notwendiges Minimum verringert werden. Außerdem kann die gesamte Anlage unmittelbar nach der Einstellung der Prallleisten stets den Fertigungsprozess fortsetzen ohne, dass einige Teile der Betonsteinfertigungsmaschine demontiert werden. So kann der Verschleiß der Rütteltischeinrichtung und insbesondere der Prallleisten deutlich reduziert werden, was wiederum zu einer konstanten Endproduktqualität führt. Die Nachjustierung der Prallleisten von derartigen Rütteleinrichtungen erfolgt somit aufgrund von einer vollautomatischen Einstellung beinahe fehlerfrei, da menschliche Bedienfehler weitestgehend ausgeschlossen werden können. Insgesamt betrachtet ist derartige Rütteleinrichtung mit selbsteinstellenden Prallleisten besonders vorteilhaft in Hinblick auf Kostenersparnis, da nicht nur die Betonsteinfertigungsmaschine insgesamt deutlich weniger verschleißt, sondern auch die Wahrscheinlichkeit zur Produktion von Ausschussware um ein Vielfaches reduziert werden kann.

Erfindungsgemäß werden derartige Rütteleinrichtungen mit zwei Verstelleinrichtungen pro Prallleiste entlang der Verschiebeachse justiert. Die Verstelleinrichtungen sind dabei jeweils an den gegenüberliegenden Enden der Prallleiste gelagert angeordnet. So können die Prallleisten vertikal ausgerichtet werden, wobei deren Verschleiß an einem Ende der Prallleiste durch eine Neigung ausgeglichen werden kann.

In einer bevorzugten Ausführungsform weisen sämtliche Prallleisten eine mit einer Auflageleiste verbundene Verschleißleiste auf, wobei die Auflageleiste durch mindestens eine Befestigungseinrichtung mit mindestens einem Verstellmechanismus verbunden ist. Bevorzugt ist die Verschleißleiste mit der Auflageleiste verschraubt, wobei die Auflageleiste am oder im Verstellmechanismus gelagert ist.

Derartige Rütteleinrichtungen weisen vorzugsweise jeweils zwei Befestigungseinrichtungen pro Prallleiste auf, wobei die Prallleiste durch die synchrone Verschiebung der Befestigungseinrichtungen entlang der Verschiebeachse einstellbar ist.

Bevorzugt weist die Befestigungseinrichtung zwei Befestigungselemente, vorzugsweise eine obere und eine untere Lagerschale, auf, wobei die Prallleiste durch die beiden Lagerschalen mit der Verstelleinrichtung verbunden ist. Die obere Lagerschale ist vorzugsweise mit einer nach oben gewandten Seite an der Verschleißleiste befestigt, wobei die untere Lagerschale mit dem Verstellmechanismus verbunden ist. Die obere Lagerschale ist vorzugsweise unterseitig mit der unteren Lagerschale verschraubt. Auch bevorzugt ist die untere Lagerschale unterseitig mit einem Gehäuse für das Verstellmechanismus verbunden, um das Verstellmechanismus vor äußeren Einflüssen zu schützen. Die Verbindung zwischen der unteren Lagerschale und dem Gehäuse vom Verstellmechanismus kann im Wesentlichen eine Lagerung darstellen.

Bevorzugt ist die Auflageleiste zwischen der oberen und unteren Lagerschale gelagert, wobei beim Betätigen des Verschiebemechanismus die gesamte Befestigungseinrichtung entlang der Verschiebeachse in ihrer Höhe veränderbar ist und so die Prallleiste relativ zu Rütteltischleisten einstellbar ist.

Es ist auch denkbar, dass die Prallleisten durch die Verstelleinrichtungen in eine Schrägstellung gebracht werden können. Erfindungsgemäß ist die Oberfläche jeder Prallleiste durch die Verstelleinrichtungen in einem Neigungswinkel bezüglich der horizontal ausgerichteten Rütteltischleisten einstellbar. Der Verstellmechanismus weist Mittel zur Einstellung von Neigungswinkel der Oberfläche der Prallleiste auf, um die Prallleiste in einer gewünschten Schrägstellung einstellen zu können. Dies hat zur Folge, dass bei einem ungleichmäßigen Verschleiß der Prallleisten, diesem durch die Schrägstellung der Prallleisten entgegengewirkt werden kann.

Es ist denkbar, dass durch derartige Befestigungseinrichtung eine Prallleiste in einem Winkel bezüglich der Rüttetischleisten einstellbar ist. Es ist denkbar, dass das erste Befestigungselement im Wesentlichen eine Form eines abgefrästen Zylinders und das zweite Befestigungselement im Wesentlichen eine Form eines Quaders aufweist. So ist das erste Befestigungselement vorzugsweise in das zweite Befestigungselement drehbar einsetzbar. Dabei kann die obere Lagerschale vorzugsweise innerhalb der unteren Lagerschale um eine Mittelachse der oberen Lagerschale gedreht werden. Die Mittelachse verläuft vorzugsweise parallel zu einer Ausbreitungsrichtung der Prallleisten. Vorzugsweise ist eine Drehbewegung um die Mittelachse zur Einstellung von einem Neigungswinkel der Oberfläche der Prallleiste geeignet und bestimmt. Dadurch kann die Prallleiste besonders einfach in einer gewünschten Schrägstellung eingestellt werden.

In einer weiteren bevorzugten Ausführungsform weist der Verstellmechanismus einen oberen Keilelement und einen mit einer Welle verbundenen unteren Keilelement auf. Durch die Drehung der Welle ist das untere Keilelement vorzugsweise entlang einer parallel zu den Prallleisten verlaufenden Achse verschiebbar. Dadurch kann das obere Keilelement entlang der Verschiebeachse eingestellt werden, wobei das obere Keilelement an seiner schrägen unteren Fläche entlang einer schrägen oberen Fläche des unteren Keilelements entlang gleitet.

Die Welle, vorzugsweise eine Spindel, ist mit einem Gewinde versehen, um eine Drehbewegung in eine Längsbewegung umzusetzen.

Vorzugsweise weist das untere Keilelement eine horizontale Fläche auf, die gegenüber der schrägen Fläche des unteren Keilelements angeordnet ist. Parallel zu der schrägen Fläche des unteren Keilelements ist vorzugsweise eine schräge untere Fläche des oberen Keilelements angeordnet. Die schrägen Flächen des unteren und des oberen Keilelements sind vorzugsweise durch den Reibschluss miteinander verbunden. Es ist denkbar, dass die schrägen Flächen der beiden Keilelemente zum besseren Gleiten mit einem geeigneten Schmiermittel beschichtet sind.

Es ist auch denkbar, dass die schrägen Flächen des unteren und des oberen Keilelements in einem Winkel zu einem Normalvektor der Prallleiste anordenbar sind, um eine geneigte Einstellung der Prallleiste zu erreichen. Die schrägen Flächen des unteren und des oberen Keilelements sind dabei vorzugsweise jeweils derart windschief anordenbar, dass die Prallleiste in einem Neigungswinkel bezüglich der zumindest benachbarten horizontal ausgerichteten Rütteltischleisten einstellbar ist.

Das untere und das obere Keilelement sind vorzugsweise innerhalb des Gehäuses entlang einer zur Verschiebeachse senkrechten Achse bewegbar. Die Bewegung kann entweder entlang der zu den Prallleisten parallel verlaufenden Achse, bzw. horizontal, oder zu den Prallleisten senkrecht verlaufenden Achse, bzw. vertikal, erfolgen.

Das untere Keilelement weist vorzugsweise ein Gewinde auf, welches mit der Welle bzw. der Spindel des Verstellmechanismus verbunden ist. Durch die Drehung der Welle ist das untere Keilelement in eine Relativbewegung bezüglich des oberen Keilelements versetztbar.

In einer weiteren Ausführungsform ist das obere Keilelement mit einem Befestigungselement der Befestigungseinrichtung verbunden, um die Prallleisten entlang der Verschiebeachse zu verschieben. Es ist auch denkbar, dass das obere Keilelement ein Teil des Befestigungselements ist.

Vorzugsweise ist die untere Lagerschale der Befestigungseinrichtung mit dem oberen Keilelement verbunden. So ist es denkbar, dass die untere Lagerschale und das oberen Keilelement miteinander verklebt, verschraubt oder verdübelt sind. Alternativ ist es auch denkbar, dass die untere Lagerschale und das obere Keilelement als ein ganzes Befestigungselement geformt sind. Dies setzt voraus, dass das Gehäuse des Verstellmechanismus eine Ausnehmung aufweist, in welche das obere Keilelement eingesetzt werden kann. Vorzugsweise ist die Ausnehmung auf einer nach oben gewandten Seite des Gehäuses angeordnet.

Das obere und das untere Keilelement sind vorzugsweise innerhalb des Gehäuses in einem Hohlraum angeordnet, wobei der Hohlraum eine Grundform eines Würfelsegments aufweist. Sämtliche seitliche Wände des oberen Keilelements berühren vorzugsweise die Wände des Hohlraumes. Dagegen berühren mindestens zwei der seitlichen Wände des unteren Keilelements die seitlichen Wände des Hohlraumes. Es ist denkbar, dass bei einer maximalen oder minimalen Höheneinstellung der Prallleiste, drei der seitlichen Wände des unteren Keilelements die seitlichen Wände des Hohlraumes berühren. Vorzugsweise gleitet das untere Keilelement beim Einstellen der Prallleisten entlang der seitlichen Wände des Hohlraumes, während das obere Keilelement entlang der schrägen Seite des unteren Keilelements verschoben wird.

In einer weiteren Ausführungsform weist der Verstellmechanismus einen Schneckenrad und eine Schneckenwelle auf, wobei durch die Drehung der Schneckenwelle die mit dem Schneckenrad verbundene Befestigungseinrichtung entlang der Verschiebeachse einstellbar ist, wobei das Schneckenrad stirnseitig mit der Schneckenwelle verzahnt ist.

Der Verstellmechanismus stellt demnach vorzugsweise ein sogenanntes Schneckengetriebe dar, wobei die Schneckenwelle mit ihrem Gewinde bei einer Umdrehung sich ein oder mehrere Zähne des Schneckenrades weiterschraubt. Das Schneckenrad ist dabei vorzugsweise unterhalb der unteren Lagerschale angeordnet. Vorzugsweise weist das Schneckenrad ein innenliegendes Gewinde auf, welches mit einem Gewinde eines Schraubelements, bevorzugt einer Spindel, verzahnt ist, um die Befestigungseinrichtung mit dem Schneckenrad zu verbinden. Das Schraubelement ist oberseitig zumindest teilweise innerhalb der unteren Lagerschale gelagert. Durch die Drehung des Schneckenrades kann das Schraubelement entlang der Verschiebeachse eingestellt werden, wobei die resultierende Verschiebung die Prallleiste relativ zu den Rüttelleisten kontinuierlich eingestellt werden kann.

Alternativ ist es denkbar, dass der Verstellmechanismus ein Schrittgetriebe, zum Beispiel ein Zylinderkurvengetriebe oder ein Globoidgetriebe, aufweist. Durch solche Schrittgetriebe ist es möglich aufgrund der getakteten Bewegung des Schneckenrades das Schraubelement schrittweise entlang der Verschiebeachse einzustellen. Ein besonderer Vorteil ist dabei, dass die Die resultierende Verschiebung der Prallleiste relativ zu den Rütteltischleisten ist dann vorzugsweise schrittweise einstellbar. Prinzipiell sind alle bekannten Getriebearten als Verstellmechanismus denkbar.

In einer weiteren bevorzugten Ausführungsform weist der Verstellmechanismus ein mit einer Stirnradwelle verzahntes und mit der Befestigungseinrichtung verbundenes Stirnrad auf, wobei durch die Drehung der Stirnradwelle die Befestigungseinrichtung entlang der Verschiebeachse einstellbar ist.

Der Verstellmechanismus kann demnach alternativ auch ein Stirnradgetriebe darstellen, wobei zwei Stirnräder bzw. das Stirnrad und die Stirnradwelle miteinander verzahnt sind. Vorzugsweise ist das Stirnrad unterhalb der unteren Lagerschale angeordnet, wobei innerhalb des Stirnrades ein Schraubelement, bevorzugt eine Spindel, mit einem innenliegenden Gewinde des Stirnrades verzahnt ist, um die Befestigungseinrichtung mit dem Stirnrad zu verbinden. Durch die Drehung der Stirnradwelle kann das Schraubelement entlang der Verschiebeachse verschoben werden, um die Prallleiste entlang der Verschiebeachse einzustellen. Das Schraubelement ist zumindest teilweise innerhalb der Befestigungseinrichtung, vorzugsweise innerhalb der unteren Lagerschale, gleitend gelagert.

Es ist denkbar, dass die sämtlichen Verstelleinrichtungen mechanisch, hydraulisch, pneumatisch und/oder elektronisch miteinander verbunden sind, um die Prallleisten entlang der Verschiebeachse zu verschieben und so relativ zu den Rütteltischleisten einzustellen.

Gemäß einem nicht beanspruchten Aspekt, bei einer mechanischen Verbindung der einzelnen Verstelleinrichtungen handelt es sich um mindestens ein gemeinsames Verbindungselement, welches durch seine Form dazu geeignet ist eine Antriebsbewegung an die sämtlichen Verstelleinrichtungen synchron zu übertragen. Erfindungsgemäß werden die Verstelleinrichtungen einzeln über mehrere Antriebseinheiten angetrieben, wobei die Anzahl der Antriebseinrichtungen der Anzahl von Verstelleinrichtungen entspricht. Die Verstelleinrichtungen sind dann vorzugsweise über die Einstellung der Antriebseinheiten elektronisch miteinander verbunden, um die synchrone Verschiebung der Prallleisten zu ermöglichen. Vorzugsweise sind die Antriebseinheiten mit einer gemeinsamen Signalquelle leitungsgebunden und elektronisch verbunden, wobei die Signalquelle ein elektrisches Signal an sämtliche Antriebseinrichtungen aussendet, um die Antriebseinheiten synchron anzutreiben.

In einer bevorzugten Ausführungsform weisen die Verstelleinrichtungen Drehmoment-Übertragungseinrichtungen auf, welche die Verstellmechanismen mit den Antriebseinheiten in einer seitlich und/oder unterhalb des Rütteltischs angeordneten Haltevorrichtung mittelbar verbinden.

Die Antriebseinheit ist zur Erzeugung von einem Drehmoment bestimmt, wobei dieser gleichzeitig auf die Verstelleinrichtung übertragen wird. Bevorzugt handelt es sich bei der Antriebseinheit um einen Elektromotor oder einen anderen eine drehende Bewegung erzeugenden Motor.

Die Haltevorrichtung ist vorzugsweise am Maschinenrahmen, an den Seiten einer Grube oder am Fundament unterhalb des Maschinenrahmens der Betonsteinfertigungsmaschine zumindest teilweise statisch verschraubt, um die Antriebseinheit platzsparend zu befestigen. Vorzugsweise sind zwei Haltevorrichtungen jeweils seitlich und/oder unterhalb des Rütteltisches und entlang einer senkrecht zu den Prallleisten verlaufenden Achse befestigt. Bei einem besonders begrenzten Bauraum innerhalb der Rütteleinrichtung, ist es denkbar, dass die Haltevorrichtung unterhalb des Rütteltisches an einer seitlichen Wand des Maschinenrahmens angeordnet ist.

Die Antriebseinheiten und die Haltevorrichtung stellen in diesem Fall vorzugsweise ein gemeinsames Verbindungselement dar, um die Verstelleinrichtungen mechanisch miteinander zu verbinden. Vorzugsweise weist die Haltevorrichtung Mittel zur Übertragung von Drehmoment auf die Drehmoment-Übertragungseinrichtungen. Beispielsweise können solche Mittel eine Kette, eine Kardanwelle oder ein Zahnriemen sein. Besonders bevorzugt kann die Haltevorrichtung eine Kette oder einen Zahnriemen aufweisen, welcher an der Haltevorrichtung angeflanscht ist. So kann vorzugsweise die Antriebseinrichtung die Kette oder den Zahnriemen zum Drehen antreiben, wobei diese drehende Bewegung auf die Zahnräder übertragen wird. Gemäß einer nicht beanspruchten Alternative kann die Haltevorrichtung Umlenkrollen aufweisen, welche das Drehmoment der Antriebseinheit auf die sämtlichen Drehmoment-Übertragungseinrichtungen überträgt und somit die Antriebseinheit mit den Verstellmechanismen mittelbar verbindet.

Gemäß einem nicht beanspruchten Aspekt entspricht die Anzahl der Zahnräder der Anzahl der an einem Ende der Prallleiste angeordneten Verstelleinrichtungen, sodass für eine synchrone Einstellung sämtlicher Prallleisten zwei Antriebseinheiten benötigt werden. Gemäß einer nicht beanspruchten Alternative kann die Einstellung der Prallleisten auch mit einer oder mehreren Antriebseinheiten erfolgen indem zwischen den zwei Enden der sämtlichen Prallleisten eine weitere Kette oder Zahnriemen gespannt werden. In einer nicht beanspruchten Ausgestaltungsform wäre die Einstellung der Prallleisten auf beiden Enden mit einer Antriebseinheit möglich.

In einer bevorzugten Ausführungsform weist die Drehmoment-Übertragungseinrichtung eine Kardanwelle auf, welche zur Übertragung eines Drehmoments auf die Verstelleinrichtungen geeignet und bestimmt ist.

In einer weiteren bevorzugten Ausführungsform weist die Drehmoment-Übertragungseinrichtung einen Zahnriemen auf, welcher zur Übertragung eines Drehmoments auf die Verstelleinrichtungen geeignet und bestimmt ist.

In einer weiteren Ausführungsform weist die Verstelleinrichtung ein Winkelgetriebe auf, welches das durch die Antriebseinheit vorgegebene Drehmoment an das Verstellmechanismus um einen Winkel überträgt, wobei das Winkelgetriebe mit der Drehmoment-Übertragungseinrichtung verbunden ist.

Es ist denkbar, dass bei dem Winkelgetriebe beispielsweise um ein Kegelradgetriebe oder ein Hypoidgetriebe handelt. Grundsätzlich ist jede Art von Winkelgetrieben hinsichtlich der Verzahnungsart oder einer Kombination aus unterschiedlichen Verzahnungsarten möglich. Vorzugsweise wird das Winkelgetriebe in Kombination aus dem Stirnradgetriebes und dem Zahnriemen oder der Kardanwelle verwendet, um die Drehbewegung an das Stirnrad zu übertragen und somit die Prallleisten durch die Verstelleinrichtung in ihrer Höhe und entlang der Verschiebeachse zu verschieben.

In einer weiteren bevorzugten Ausführungsform ist die Rütteleinrichtung derart einstellbar, dass in einem Ruhezustand die Prallleisten unterhalb der Rütteltischleisten angeordnet sind oder eine gemeinsame Ebene aufspannen. Alternativ wäre die Einstellung der Rütteleinrichtung, wobei die Prallleisten im Ruhezustand der Rütteleinrichtung oberhalb der Rütteltischleisten angeordnet sind, ebenfalls denkbar.

Die Position der Prallleisten entlang der Verschiebeachse ist abhängig vom Material einer im Fertigungsprozess verwendeten Fertigungsunterlage. Bei Verwendung von einer Fertigungsunterlage aus Holz sind die Prallleisten vorzugsweise in einem Bereich von 1,2 mm und 0,7 mm, bevorzugt 1 mm, unterhalb der Rütteltischleisten einzustellen. Im Falle einer verwendeten Fertigungsunterlage aus Kunststoff sind die Prallleisten in einem Bereich von 0,7 mm und 0,3 mm, bevorzugt 0,6 mm, unterhalb der Rütteltischleisten einzustellen. Bei Verwendung von Fertigungsunterlagen aus Stahl sind die Prallleisten derart einzustellen, dass diese mit den Rütteltischleisten eine gemeinsame Ebene aufspannen.

Die vorliegende Erfindung ist weiterhin auf Betonsteinfertigungsmaschinen zur Verdichtung eines zu verdichtenden Materials gerichtet. Die zuvor beschriebene Rütteltischeinrichtung wird als ein Teil der Betonsteinfertigungsmaschine betrachtet.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen.

Hierbei zeigen:
Fig. 1 in einer perspektivischen Darstellung, eine Betonsteinfertigungsanlage mit einer Rütteleinrichtung und einer Mehrzahl durch Verstelleinrichtungen einstellbaren Prallleisten;
Fig. 2 in einer perspektivischen Darstellung, eine Verstelleinrichtung einer Prallleiste gemäß einer ersten Ausführungsform der Erfindung;
Fig. 2a in einer perspektivischen Querschnittsdarstellung, eine Verstelleinrichtung einer Prallleiste gemäß einer ersten Ausführungsform der Erfindung;
Fig. 2b in einer schematischen Darstellung, eine Verstelleinrichtung einer Prallleiste gemäß einer ersten Ausführungsform der Erfindung in einer ersten Position;
Fig. 2c in einer schematischen Darstellung, eine Verstelleinrichtung einer Prallleiste gemäß einer ersten Ausführungsform der Erfindung in einer zweiten Position;
Fig. 3 in einer perspektivischen Darstellung, eine Verstelleinrichtung einer Prallleiste gemäß einer zweiten Ausführungsform der Erfindung;
Fig. 3a in einer schematischen Darstellung, eine Verstelleinrichtung einer Prallleiste gemäß einer zweiten Ausführungsform der Erfindung in einer ersten Position;
Fig. 3b in einer schematischen Darstellung, eine Verstelleinrichtung einer Prallleiste gemäß einer ersten Ausführungsform der Erfindung in einer zweiten Position;
Fig. 4 in einer perspektivischen Querschnittsdarstellung, eine Verstelleinrichtung einer Prallleiste gemäß einer dritten Ausführungsform der Erfindung;
Fig. 5 in einer perspektivischen Darstellung, Verstelleinrichtungen mit Drehmoment-Übertragungseinrichtungen gemäß einer Ausführungsform der Erfindung;
Fig. 6 in einer perspektivischen Darstellung, Verstelleinrichtungen mit Drehmoment-Übertragungseinrichtungen gemäß einer weiteren Ausführungsform der Erfindung;
Fig. 7a in einer perspektivischen transparenten Darstellung, eine Verstelleinrichtung einer Prallleiste gemäß einer weiteren Ausführungsform der Erfindung;
Fig. 7b in einer perspektivischen Darstellung, eine Verstelleinrichtung einer Prallleiste gemäß einer in Fig. 7a gezeigten Ausführungsform als Vollkörper.

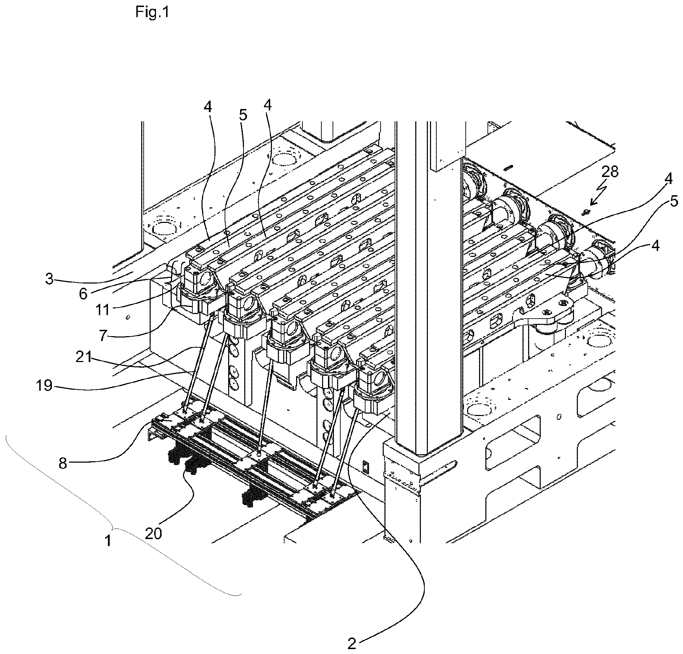

Figur 1 zeigt, in einer perspektivischen Darstellung, eine Betonsteinfertigungsanlage 28 mit einer Rütteleinrichtung 1 und einer Mehrzahl durch Verstelleinrichtungen 6 einstellbaren und justierbaren Prallleisten 5. Die gezeigte Rütteleinrichtung weist einen Rütteltisch 2 mit Rütteltischleisten 4 auf, die mit einem Maschinenrahmen 3 der Betonsteinfertigungseinrichtung 28 verschraubt sind. Die gezeigten Prallleisten 5 sind durch die Verstelleinrichtungen 6 in ihrer Höhe relativ zu den Rütteltischleisten 4 einstellbar.

Typischerweise weist eine gattungsgleiche Rütteleinrichtung 1 insgesamt fünf Prallleisten 5 und zehn Rütteltischleisten 4. Jede Prallleiste 5 ist dabei zwischen zwei Rütteltischleisten 4 angeordnet. Andere Anzahl von Prallleisten 5 und Rütteltischleisten 4 wäre ebenfalls denkbar.

Die dargestellten Verstelleinrichtungen 6 weisen Befestigungseinrichtungen 11 und Verstellmechanismen 7 auf. Die Verstellmechanismen 6 sind mit Antriebseinheiten 20 über Drehmoment-Übertragungseinrichtungen 19 mechanisch verbunden. In der dargestellten Ausführungsform der Betonsteinfertigungseinrichtung 28 sind die Drehmoment-Einrichtungen 19 als Kardanwellen 21 ausgebildet.

Die Antriebseinheiten 20 sind unterhalb einer gemeinsamen Haltevorrichtung 8 befestigt. Die Haltevorrichtung 8 ist vorzugsweise seitlich der Rütteleinrichtung 1 in einer Grube befestigt.

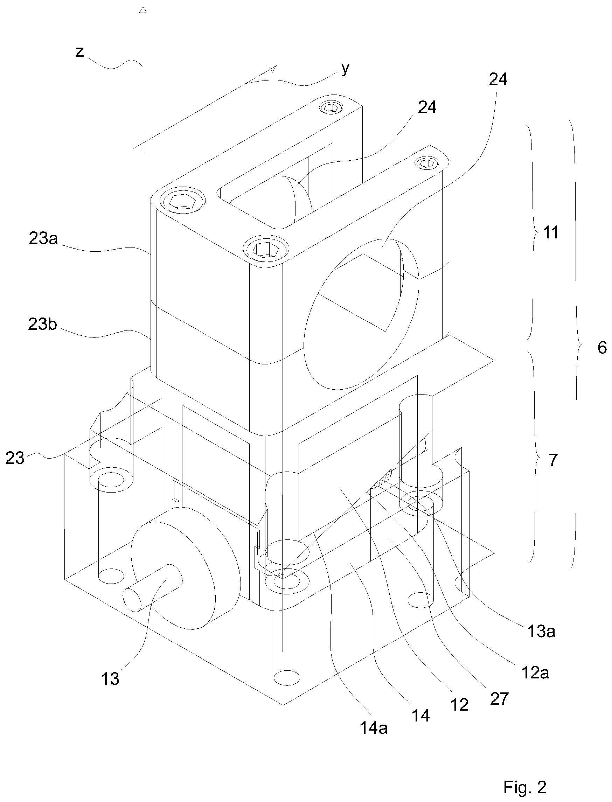

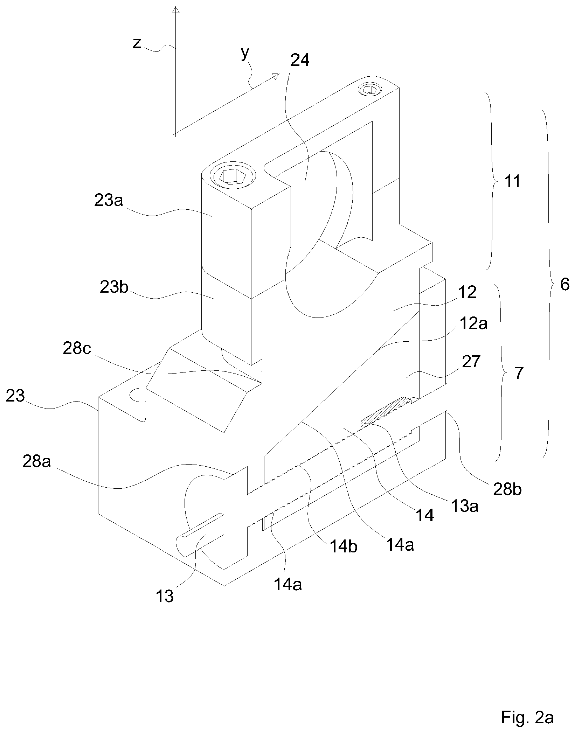

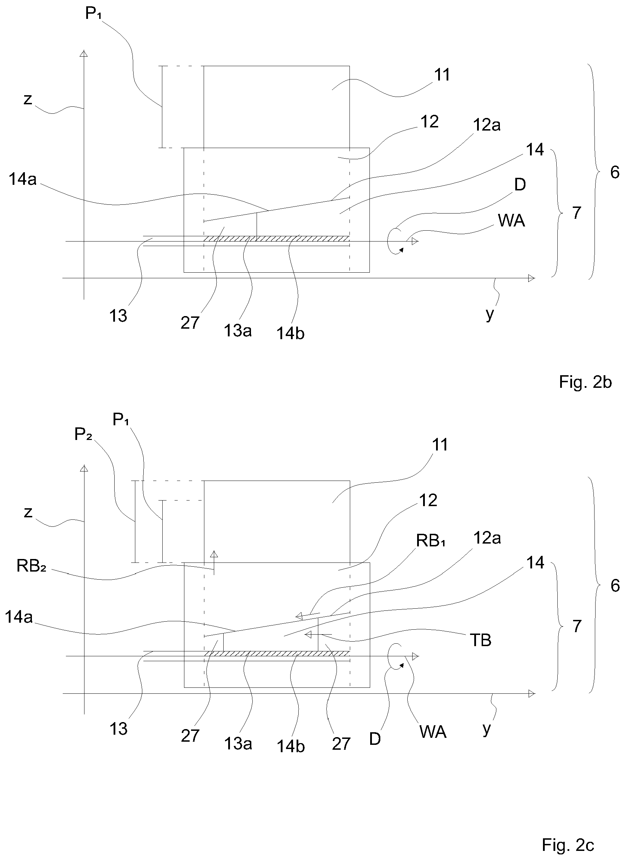

Figur 2 zeigt, in einer perspektivischen Darstellung, eine Verstelleinrichtung 6 einer Prallleiste 5 gemäß einer ersten Ausführungsform der Erfindung. Die gezeigte Verstelleinrichtung weist einen oberen Teil, der als eine Befestigungseinrichtung 11 für die Prallleiste 5 ausgebildet ist, und einen unteren Teil, der als ein Verstellmechanismus 7 ausgebildet ist. Die Befestigungseinrichtung ist zur Befestigung der Prallleiste bestimmt und weist eine obere 23a und eine untere ein oberes Keilelement 12 aufweisende Lagerschale 23b auf, zwischen welche die Prallleiste 5 zumindest teilweise eingesetzt werden kann. Beide Lagerschalen weisen jeweils eine Aussparung 24 auf, wobei die Aussparungen zusammen, in einem verschraubten Zustand der Lagerschalen, eine runde Grundform aufweisen. Die untere Lagerschale ist in der dargestellten Ausführungsform der Verstelleinrichtung zusammen mit einem oberen Teil des Verstellmechanismus 7, welcher als ein oberes Keilelement 12 gezeigt ist, als ein einziges Bauteil dargestellt.

Der Verstellmechanismus 7 ist durch ein Gehäuse 23 vor äußeren Einflüssen geschützt und weist ein oberes Keilelement 12, ein unteres Keilelement 14 und eine Welle 13 auf. Der Verstellmechnismus ist dafür bestimmt durch die Drehung der Welle 13 die Befestigungseinrichtung entlang einer Verschiebeachse z zu verschieben, um so eine gewünschte Position der Prallleiste einzustellen. Dazu weist das obere Keilelement 12 eine schräge untere Fläche 12a und das untere Keilelement 14 eine schräge obere Fläche 14a auf, wobei die beiden schrägen Flächen komplementär miteinander verbunden sind, sich gegenseitig berühren und vorzugsweise durch eine T-Nut geführt sind. Das untere Keilelement 14 ist weiterhin durch ein Gewinde (dargestellt in Fig. 2a) mit der Welle 13 drehend mechanisch verbunden.

Das Gehäuse 23 für den Verstellmechanismus 7 weist einen Hohlraum 27 auf, in welchen die Keilelemente und die Welle eingesetzt sind. Der Hohlraum 27 weist vorzugsweise eine Würfelform auf, in welcher das obere Keilelement 12 mit seiner ebenfalls würfelartigen Grundform entlang der senkrechten Seiten bei einer Verschiebebewegung gleitet. Das untere Keilelement 14 ist im unteren Bereich des Hohlraumes 27 angeordnet und gleitet entlang der zwei parallel zueinander angeordneten senkrechten Seiten des Hohlraumes während einer durch die Drehung der Welle verursachten Relativbewegung. Das Gehäuse 23 weist weiterhin zwei parallel zueinander angeordnete Aussparungen 28a, 28b (abgebildet in Fig. 2a) an den senkrechten Seiten des Gehäuses für die Welle und eine weitere Aussparung 28c (abgebildet in Fig. 2a) auf einer Oberseite des Gehäuses für das obere Keilelement auf. Der Hohlraum 27 des Gehäuses 23 bildet die Aussparung für das obere Keilelement 12.

Figur 2a zeigt, in einer perspektivischen Querschnittsdarstellung, die Verstelleinrichtung 6 aus der Figur 2. Das untere Keilelement 14 weist ein Gewinde 14a auf seiner Unterseite auf, in welches ein Gewinde 13a der Welle 13 eingeführt ist. Es ist auch denkbar, dass das untere Keilelement 14 eine Aussparung aufweist, welche mit einem Gewinde versehen ist. In einem solchen Falle, ist die Welle in die Aussparung des unteren Keilelements 14 einsetzbar, um die Welle mit dem unteren Keilelement zu verzahnen. Vorzugsweise ist die Welle als eine Spindel ausgebildet, wobei diese in die Aussparungen 28a des Gehäuses 23 eingesetzt ist, wobei das Gewinde 13a der Welle überwiegend innerhalb des Hohlraumes 27 angeordnet ist.

Figuren 2b und 2c zeigen, in einer schematischen Darstellung, die in Figur 2 dargestellte Verstelleinrichtung 6 in einer ersten P1 und einer zweiten P2 Einstellposition. Die gezeigte Verstelleinrichtung ist entlang einer Verschiebeachse z verschiebbar. Die Position P1 stellt dabei eine Ausgangsposition dar und die Position 2 eine gewünschte Einstellposition der Verstelleinrichtung. Die Position 2 zeichnet sich dadurch aus, dass die Befestigungseinrichtung 11 insgesamt im Vergleich zu Position1 durch eine Relativbewegung RB2, gemessen entlang der Verschiebeachse z, höher eingestellt werden kann. Diese Relativbewegung RB2 ist eine unmittelbare Reaktion auf die Relativbewegung RB1 des unteren Keilelements 14 und die Drehbewegung D der Welle 13. Während die Welle 13 um ihre Wellenachse WA gedreht wird, wird diese Drehbewegung D durch ihr Gewinde 13a auf das Gewinde 14b des unteren Keilelements 14 als eine Translationsbewegung TB entlang einer zur Verschiebeachse senkrechten Achse y übertragen. Die Translationsbewegung TB des unteren Keilelements 14 wird über seine schräge obere Fläche 14a auf das obere Keilelement 12 durch das Gleiten entlang der schrägen unteren Fläche 12a übertragen. Dadurch entsteht eine Relativbewegung RB1 zwischen dem oberen Keilelement 12 und dem unteren Keilelement 14, welche zu einer Relativbewegung RB2 führt.

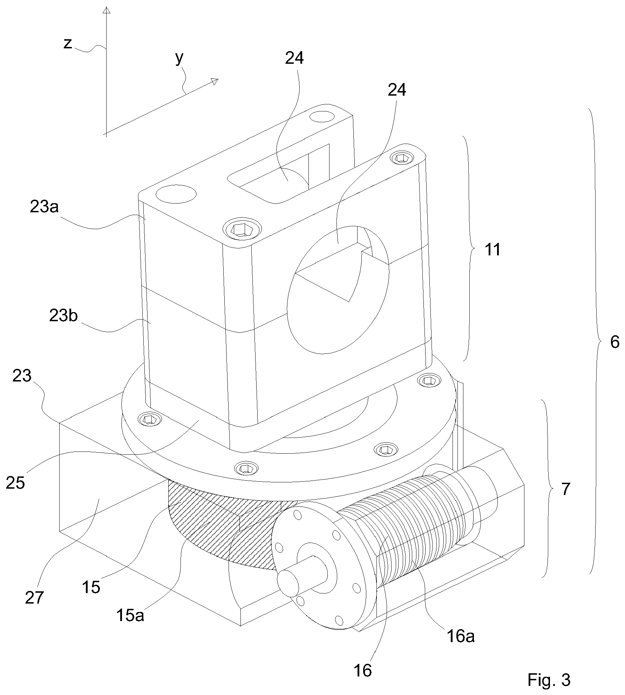

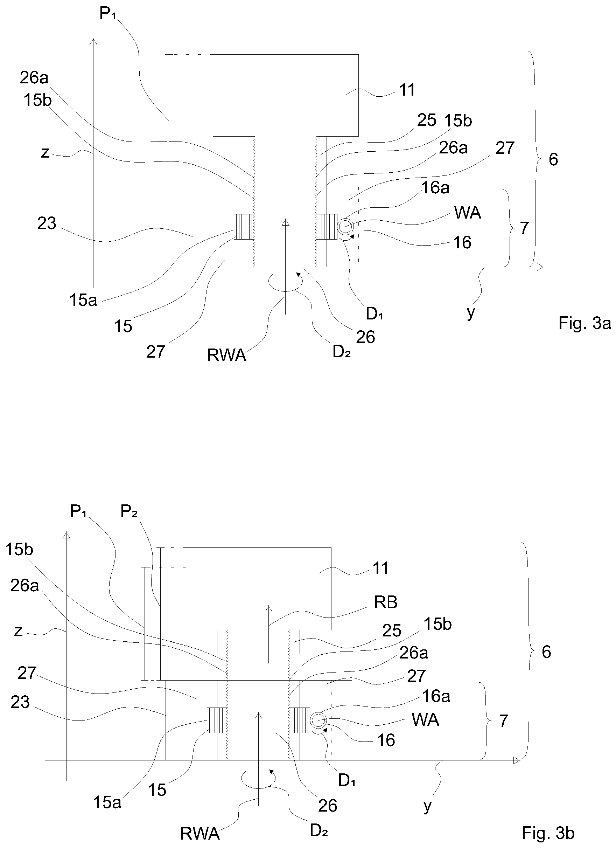

Figur 3 zeigt, in einer perspektivischen Darstellung, eine Verstelleinrichtung 6 einer Prallleiste 5 gemäß einer zweiten Ausführungsform der Erfindung. Die hier gezeigte Verstelleinrichtung 6 weist Befestigungseinrichtung 11 mit zwei Lagerschalen 23a, 23b, ein Verstellmechanismus 7 und ein Lagerelement 25 auf. Es ist denkbar, dass es sich bei dem Lagerelement 25 um einen Gleitlager handelt.

Zwischen der Lagerschalen ist eine Prallleiste zumindest teilweise anordenbar und verschraubbar. Grundsätzlich ist die Befestigungseinrichtung 11 ähnlich zu der in Figur 2 gezeigten Befestigungseinrichtung. Der Unterschied besteht lediglich darin, dass die untere Lagerschale 23b mit einem Schraubelement 26 (in Figur 3a dargestellt) über das Lagerelement 25 verbunden ist.

Das Verstellmechanismus 7 ist ein sogenanntes Schneckengetriebe und weist eine Schneckenwelle 16 mit einem Gewinde 16a, ein Schneckenrad 15 mit mehreren Zähnen 15a und das sich innerhalb des Schneckenrades angeordnete Schraubelement 26. Das Gewinde 16a ist mit den Zähnen 15a verzahnt, wobei das Schneckenrad 15 mit dem Schraubelement 26 verschraubt ist (in Fig. 3a dargestellt). Der Verstellmechanismus 7 ist in einem Hohlraum 27 eines Gehäuses 23 untergebracht, welches die darin liegenden Bauteile des Verstellmechanismus vor Verschmutzungen, fremde Krafteinwirkungen und Feuchtigkeit schützt.

Figuren 3a und 3b zeigen, in einer schematischen Darstellung, die in Figur 3 dargestellte Verstelleinrichtung einer Prallleiste in einer ersten Einstellposition P1 und einer zweiten Einstellposition P2. Die Positionen P1 und P2 entsprechen den in Figuren 2b und 2c definierten Ausgangsposition und gewünschten Einstellposition der Verstelleinrichtung 6. Die Position P2 kann durch das Drehen an der Schneckenwelle 16 um ihre eigene Wellenachse WA eingestellt werden, wobei die Schneckenwelle 16 durch ihre Verzahnung mit dem Schneckenrad 15 diesen um seine eigene Radachse RWA mitdreht. Die Radachse RWA und die Wellenachse WA sind senkrecht zueinander angeordnet, wobei die Radachse parallel zu der Verschiebeachse z verläuft.

Beim Drehen der Schneckenwelle 16 entsteht eine erste Drehbewegung D1, welche durch das Gewinde 16a an die Zähne 15a des Schneckenrades 15 übertragen wird. Dadurch wird das Schneckenrad 15 um seine Radachse RWA gedreht und es entsteht eine zweite Drehbewegung D2. Durch die zweite Drehbewegung D2 wird ein innerhalb des Schneckenrades 15 angeordneten Schraubgewinde 15b ein Schraubgewinde 26a des Schraubelements 26 in einer Relativbewegung RB entlang der Verschiebeachse z nach oben verschoben.

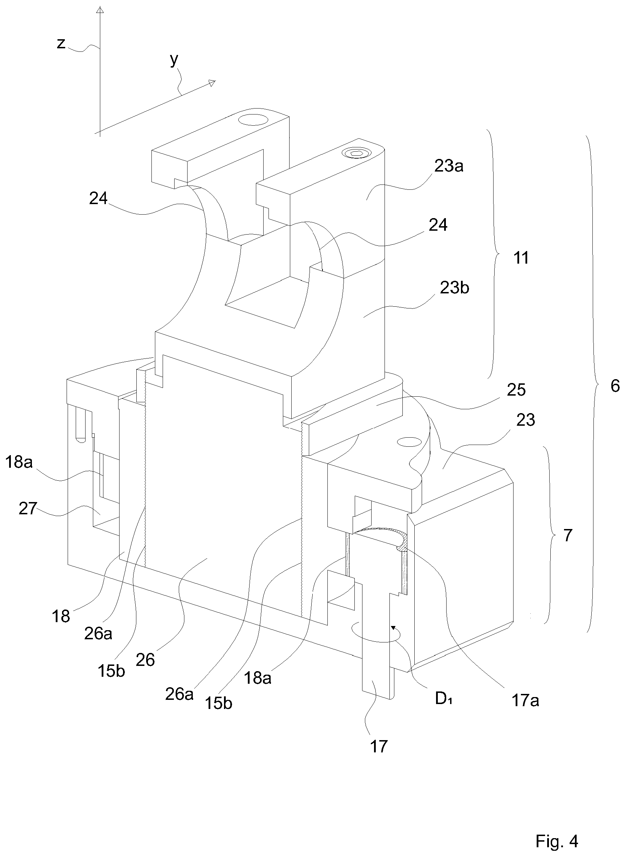

Figur 4 zeigt, in einer perspektivischen Querschnittsdarstellung, eine Verstelleinrichtung 6 einer Prallleiste 5 gemäß einer dritten Ausführungsform der Erfindung. Die Verstelleinrichtung 6 weist ein Verstellmehanismus 7 auf, welches ein Stirnradgetriebe darstellt. Der Verstellmechanismus 7 weist eine Stirnradwelle 17 und ein Stirnrad 18 auf, wobei die Stirnradwelle 17 über ihre Zähne 17a mit den Zähnen 18b des Stirnrades 18 verzahnt ist. Die gezeigte Verstelleinrichtung 6 ähnelt der in Figur 3 gezeigten Verstelleinrichtung. Ein wesentlicher Unterschied besteht darin, dass die Stirnradwelle 17 sich um eine Wellenachse dreht, die parallel zu der Stirnradachse RWA verläuft. Die Sirnradachse RWA und die Wellenachse WA verlaufen beide parallel zu einer Verschiebeachse z.

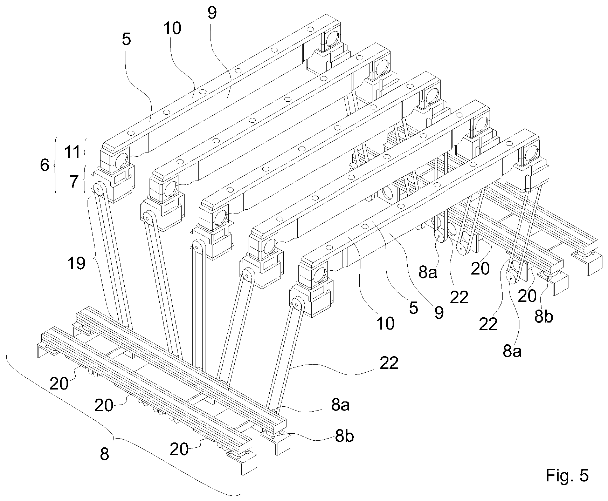

Figur 5 zeigt, in einer perspektivischen Darstellung, die in Figur 1 dargestellten Verstelleinrichtungen 6 mit Drehmoment-Übertragungseinrichtungen 19. In der gezeigten Figur stellen die Drehmoment-Übertragungseinrichtungen 19 Zahnriemen 21 dar. Die Verstelleinrichtungen 6 sind über Zahnriemenscheiben bzw. Zahnriemenräder 8a und eine Drehmoment-Übertragungseinrichtung 19 von einer Antriebseinheit 20 angetrieben. Vorzugsweise weist die Haltevorrichtung 8 mehrere Schwingungsdämpfer 8b auf, welche die einzelnen Bauelemente vor Erschütterungen während des Produktionsprozesses schützen. Die zweite Drehmoment-Übertragungseinrichtung, die Umlenkzahnräder 8a und die Antriebseinheit 20 könnten an einer Haltevorrichtung 8 befestigt sein. Die Anzahl der Zahnriemenscheibe bzw. Zahnriemenräder 8a entspricht dabei der Anzahl von Verstelleinrichtungen 6, sodass jede Verstelleinrichtung 6 über eine eigene Drehmoment-Übertragungseinrichtung 19 und die Zahnriemenscheiben bzw. Zahnriemenräder 8a die Verstellmechanismen 7 verstellt, um eine Verschiebung der Prallleisten 5 relativ zu den Rütteltisch leisten 4 zu erhalten. In der gezeigten Ausführungsform der Erfindung sind zehn Antreibseinheiten 20 jeweils unterhalb der Haltevorrichtung 8 angeordnet.

Die Prallleisten 5 weisen jeweils eine Auflageleiste 9 und eine Verschleißleiste 10 auf, wobei die Auflageleisten 9 jeweils innerhalb der Befestigungseinrichtungen 11 zwischen zwei Lagerschalen 23a, 23b verschraubt werden. Die Verschleißleisten 10 sind oberhalb der Befestigungseinrichtungen 11 jeweils festgeschraubt.

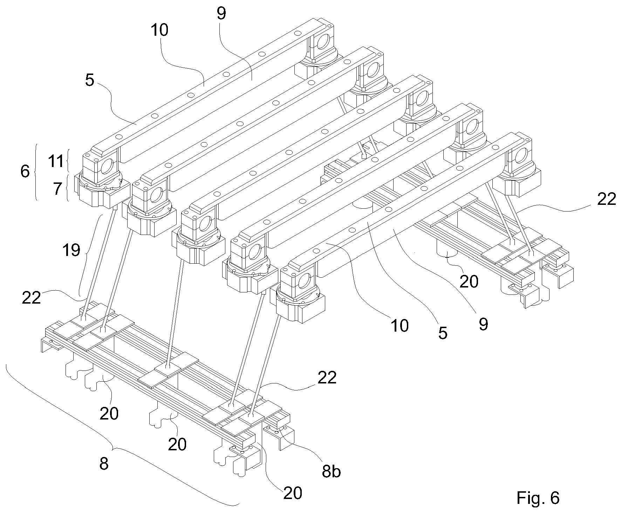

Figur 6 zeigt, in einer perspektivischen Darstellung, die in Figur 3 dargestellten Verstelleinrichtungen 6 mit Drehmoment-Übertragungseinrichtungen 19 gemäß einer weiteren Ausführungsform der Erfindung. In der gezeigten Figur stellen die Drehmoment-Übertragungseinrichtungen 19 Kardanwellen 22 dar. Vorteilhafterweise sind die Kardanwellen 22 mit den Stirngetrieben als Verstelleinrichtungen 6 kombiniert.

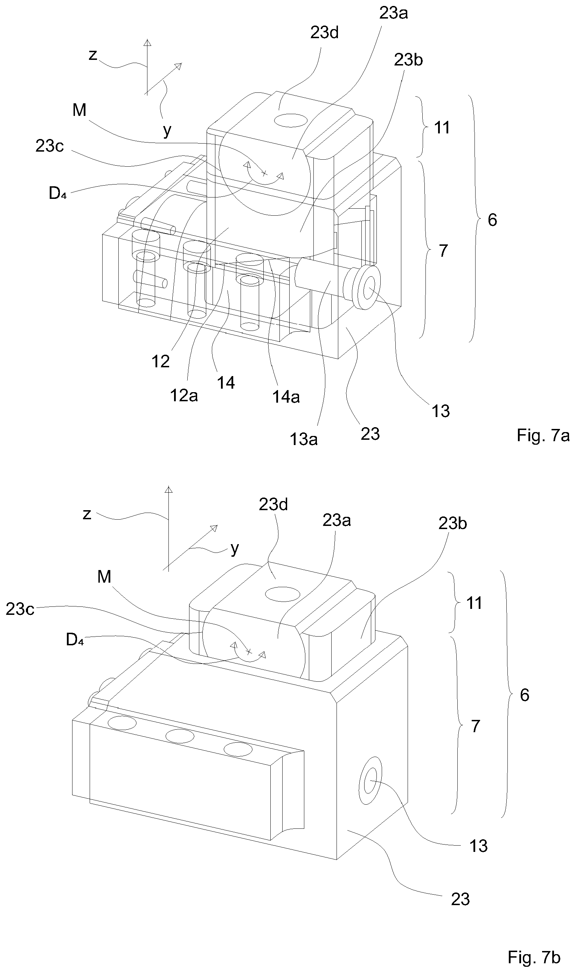

Figur 7a zeigt, in einer perspektivischen transparenten Darstellung, eine Verstelleinrichtung 6 einer Prallleiste 5 gemäß einer weiteren Ausführungsform der Erfindung. Die Figur 7b zeigt dieselbe Verstelleinrichtung 6 als Vollkörper. Die gezeigte Verstelleinrichtung 6 ist im Wesentlichen ähnlich der Verstelleinrichtung aus der Figur 2. Die Verstelleinrichtung 6 weist folglich ebenfalls eine Befestigungseinrichtung 11 für die Prallleiste 5 und ein Verstellmechanismus 7, welcher in einem Gehäuse 23 verbaut ist.

Die Befestigungseinrichtung 11 weist vorzugsweise ein erstes 23a und ein zweites 23b Befestigungselement auf, wobei das zweite Befestigungselement 23b eine Bohrung 23c, vorzugsweise eine teiloffene Bohrung, aufweist, in welche das erste Befestigungselement 23a einsetzbar ist. Das zweite Befestigungselement 23b weist im Wesentlichen eine Form eines Quaders auf, welcher teilweise in einem Gehäuse 23 einordenbar ist. Der in das Gehäuse 23 einordenbare Teil des zweiten Befestigungselements 23b weist vorzugsweise ein Keilelement 12 mit einer schrägen unteren Fläche 12a auf. Diese Fläche 12a ist, wie in Figur 2 erläutert, ein Teil des Verstellmechanismus 7.In den außerhalb des Gehäuses 23 befindliche Teil des zweiten Befestigungselementes 23b ist das erste Befestigungselement 23a zumindest teilweise einsetzbar.

Vorzugsweise weist das erste Befestigungselement 23a im Wesentlichen eine Form eines Zylinders auf. Es ist denkbar, dass die Mantelfläche das erste Befestigungselement 23a eine Planfläche 23d aufweist, welche außerhalb das zweite Befestigungselement 23b anordenbar ist.

Es ist denkbar, dass durch derartige Befestigungseinrichtung 6 eine Prallleiste 5 in einem Winkel bezüglich der Rüttetischleisten 6 einstellbar ist, indem das erste Befestigungselement 23a innerhalb des zweiten Befestigungselements 23b um eine Mittelachse M des ersten Befestigungselements 23a gedreht wird. Vorzugsweise ist eine solche Drehbewegung D4 um die Mittelachse M zur Einstellung von einem Neigungswinkel der Oberfläche der Prallleiste 5 geeignet und bestimmt. Dadurch kann die Prallleiste 5 besonders einfach in einer gewünschten Schrägstellung eingestellt werden.

### Bezugszeichenliste

- 1: Rütteleinrichtung
- 2: Rütteltisch
- 3: Maschinenrahmen
- 4: Rütteltischleisten
- 5: Prallleisten
- 6: Verstelleinrichtung
- 7: Verstellmechanismus
- 8: Haltevorrichtung
- 8a: Zahnriemenscheibe / Zahnriemenrad
- 9: Auflageleiste einer Prallleiste
- 10: Verschleißleiste einer Prallleiste
- 11: Befestigungseinrichtung
- 12: Oberes Keilelement
- 12a: Schräge untere Fläche des oberen Keilelements
- 13: Welle
- 13a: Gewinde der Welle
- 14: Unteres Keilelement
- 14a: Schräge obere Fläche des unteren Keilelements
- 14b: Gewinde des unteren Keilelements
- 15: Schneckenrad
- 15a: Zähne des Schneckenrades
- 15b: Schraubgewinde innerhalb des Schneckenrades
- 16: Schneckenwelle
- 16a: Gewinde der Schneckenwelle
- 17: Stirnradwelle
- 17a: Zahnräder der Stirnwelle
- 18: Stirnrad
- 18a: Zähne des Stirnrades
- 19: Drehmoment-Übertragungseinrichtung
- 20: Antriebseinheit
- 21: Kardanwelle
- 22: Zahnriemen
- 23: Gehäuse
- 23a: Obere Lagerschale / erstes Befestigungselement
- 23b: Untere Lagerschale / zweites Befestigungselement
- 23c: ¾ Bohrung
- 24: Ausnehmung in der Befestigungseinrichtung
- 25: Lagerelement
- 26: Schraubelement
- 26a: Schraubgewinde des Schraubelements
- 27: Hohlraum im Gehäuse
- 28: Betonsteinfertigungsmaschine
- Z: Verschiebeachse
- Y: zu der Prallleiste parallel verlaufende Achse
- X: zu der Prallleiste und der Verschiebeachse senkrecht verlaufende Achse
- D1: Erste Drehbewegung
- D2: Zweite Drehbewegung
- D4: Drehbewegung um die Mittelachse
- M: Mittelachse der oberen Lagerschale
- WA: Wellenachse
- RWA: Radachse
- RB1: Erste Relativbewegung
- RB2: zweite Relativbewegung
- P1: Erste Einstellposition der Verstelleinrichtung / Ausgangsposition
- P2: Zweite Einstellposition der Verstelleinrichtung / gewünschte Einstellposition

## Patentansprüche

1. Rütteleinrichtung (1) mit einem Rütteltisch (2), für eine Betonsteinfertigungsmaschine zur Verdichtung eines zu verdichtenden Materials, wobei die Rütteleinrichtung (1) zumindest teilweise elastisch gelagert auf einem Maschinenrahmen (3) befestigt und
durch mindestens einen Elektromotor angetrieben ist und dadurch der Rütteltisch (2) in eine vorwiegend senkrechte Rüttelbewegung versetzbar ist, wobei die Rütteleinrichtung (1) mehrere parallel zueinander angeordnete, am Rütteltisch (2) befestigte
Rütteltischleisten (4) und am Maschinenrahmen (3) statisch befestigte Prallleisten (5) aufweist,
wobei die Prallleisten (5) relativ zu den Rütteltischleisten (4) und entlang einer zur senkrechten Rüttelbewegung parallel verlaufenden Verschiebeachse (z) durch Verstelleinrichtungen (6) verschiebbar sind,
wobei die Rütteleinrichtung (1) zwei Verstelleinrichtungen (6) pro Prallleiste (5) aufweist, die jeweils an den gegenüberliegenden Enden der Prallleiste gelagert angeordnet sind,
wobei die Rütteleinrichtung (1) dazu eingerichtet ist, die Oberfläche jeder Prallleiste (5) durch die Verstelleinrichtungen (6) in einem Neigungswinkel bezüglich der horizontal ausgerichteten Rütteltischleisten (4) einzustellen,
**dadurch gekennzeichnet, dass** sämtliche Prallleisten (5) relativ zu den Rütteltischleisten (4) und entlang der Verschiebeachse (z) durch mehrere miteinander verbundene Antriebseinheiten (20) angetriebene Verstelleinrichtungen (6) verschiebbar sind, um eine Verschiebung sämtlicher Prallleisten (5) zu erhalten,
und dass die Verstelleinrichtungen (6) einzeln über mehrere Antriebseinheiten (20) angetrieben werden, wobei die Anzahl der Antriebseinheiten der Anzahl der Verstelleinrichtungen (6) entspricht.

2. Rütteleinrichtung (1) nach Anspruch 1,
**dadurch gekennzeichnet, dass**
sämtliche Prallleisten (5) eine mit einer Auflageleiste (9) verbundene Verschleißleiste (10) aufweisen,
jede Verstelleinrichtung (6) eine Befestigungseinrichtung (11) und einen Verstellmechanismus (7) aufweist, wobei die Auflageleiste (9) durch die Befestigungseinrichtung (11) mit dem Verstellmechanismus (7) verbunden ist.

3. Rütteleinrichtung (1) nach Anspruch 2,
**dadurch gekennzeichnet, dass**
der Verstellmechanismus (7) ein oberes Keilelement (12) und ein mit einer Welle (13) verbundenes unteres Keilelement (14) aufweist, wobei durch die Drehung der Welle (13) das untere Keilelement (14) entlang einer parallel zu den Prallleisten (5) verlaufenden Achse (y) verschiebbar ist und dadurch das obere Keilelement (12) entlang
der Verschiebeachse (z) einstellbar ist, wobei das obere Keilelement (12) unterseitig entlang einer schrägen oberen Fläche (14a) des unteren Keilelements (14) entlang gleitet.

4. Rütteleinrichtung (1) nach Anspruch 3,
**dadurch gekennzeichnet, dass**
der obere Keil (12) mit einem Befestigungselement (23b) der Befestigungseinrichtung (11) verbunden ist, um die Prallleisten (5) entlang der Verschiebeachse (z) zu verschieben.

5. Rütteleinrichtung (1) nach Anspruch 2,
**dadurch gekennzeichnet, dass**
der Verstellmechanismus (7) ein Schneckenrad (15) und eine Schneckenwelle (16) aufweist, wobei durch die Drehung der Schneckenwelle (16) die mit dem Schneckenrad (15) verbundene Befestigungseinrichtung (11) entlang der Verschiebeachse (z) einstellbar ist, wobei das Schneckenrad (15) stirnseitig mit der Schneckenwelle (16) verzahnt ist.

6. Rütteleinrichtung (1) nach Anspruch 2,
**dadurch gekennzeichnet, dass**
der Verstellmechanismus (7) ein mit einer Stirnradwelle (17) verzahntes und mit der Befestigungseinrichtung (11) verbundenes Stirnrad (18) aufweist, wobei durch die Drehung der Stirnradwelle (17) die Befestigungseinrichtung (11) entlang der Verschiebeachse (z) einstellbar ist.

7. Rütteleinrichtung (1) nach einem der Ansprüche 2 - 6,
**dadurch gekennzeichnet, dass**
die Verstelleinrichtung (6) eine Drehmoment-Übertragungseinrichtung (19) aufweist,
welche die Verstellmechanismen (7) mit der Antriebseinheit (20) in einer seitlich und/oder unterhalb des Rütteltischs (2) angeordneten Haltevorrichtung (8) mittelbar verbinden.

8. Rütteleinrichtung (1) nach Anspruch 7,
**dadurch gekennzeichnet, dass**
die Drehmoment-Übertragungseinrichtung (19) eine Kardanwelle (22) aufweist, welche zur Übertragung eines Drehmoments auf die Verstelleinrichtungen (6) geeignet und bestimmt ist.

9. Rütteleinrichtung (1) nach Anspruch 7,
**dadurch gekennzeichnet, dass**
die Drehmoment-Übertragungseinrichtung (19) einen Zahnriemen (21) aufweist, welcher zur Übertragung eines Drehmoments auf die Verstelleinrichtungen (6) geeignet und bestimmt ist.

10. Rütteleinrichtung (1) nach Anspruch 7 oder 9,
**dadurch gekennzeichnet, dass**
die Verstelleinrichtung ein Winkelgetriebe aufweist, welches das durch die Antriebseinheit vorgegebene Drehmoment an den Verstellmechanismus um einen Winkel überträgt, wobei das Winkelgetriebe mit der Drehmoment-Übertragungseinrichtung verbunden ist.

11. Rütteleinrichtung (1) nach einem der vorgehenden Ansprüche,
**dadurch gekennzeichnet, dass**
die Rütteleinrichtung (1) derart einstellbar ist, dass in einem Ruhezustand die Prallleisten (5) unterhalb der Rütteltischleisten (4) angeordnet sind oder eine gemeinsame Ebene aufspannen.

12. Rütteleinrichtung (1) nach Anspruch 2,
**dadurch gekennzeichnet, dass**
die Befestigungseinrichtung (11) ein erstes Befestigungselement und ein zweites Befestigungselement aufweist, wobei das erste Befestigungselement eine Form eines abgefrästen Zylinders und das zweite Befestigungselement eine Form eines Quaders aufweist.

13. Betonsteinfertigungsmaschine (28) zur Verdichtung eines zu verdichtenden Materials, wobei die Betonsteinfertigungsmaschine (28) eine Rütteleinrichtung (1) nach einem der vorhergehenden Ansprüche aufweist.

## Claims

1. A vibrating device (1) comprising a vibrating table (2) for a concrete block manufacturing machine for compacting a material to be compacted, wherein the vibrating device (1) is mounted on a machine frame (3) with at least partial elastic support and driven by at least one electric motor, thereby causing the vibrating table (2) can be set in a predominantly vertical vibrating motion, wherein the vibrating device (1) comprises several vibration table strips (4) arranged parallel to one another and secured to the vibration table (2) vibrating table strips (4) arranged parallel to one another and fixed to the vibrating table (2), and impact strips (5), wherein the impact strips (5) are displaceable relative to the vibrating table strips (4) and along a displacement axis (z) running parallel to the vertical vibrating motion by means of adjustment devices (6),
wherein the vibrating device (1) comprises two adjustment devices (6) per impact strip (5), which are each mounted at the opposite ends of the impact strip,
wherein the vibrating device (1) is configured to adjust the surface of each impact bar (5) by means of the adjustment devices (6) to an angle of inclination relative to the horizontally aligned vibrating table bars (4),
**characterized in that** all impact bars (5) are displaceable relative to the vibrating table bars (4) and along the displacement axis (z) by means of adjustment devices (6) driven by a plurality of interconnected drive units (20) to achieve displacement of all impact bars (5), and that the adjustment devices (6) are driven individually by a plurality of drive units (20), wherein the number of drive units corresponds to the number of adjustment devices (6).

2. A vibrating device (1) according to claim 1,
**characterized in that** all impact strips (5) comprise a wear strip (10) connected to a support strip (9),
each adjustment device (6) comprises a fastening device (11) and an adjustment mechanism (7), wherein the support strip (9) is connected to the adjustment mechanism (11) to the adjustment mechanism (7).

3. Vibrating device (1) according to claim 2,
**characterized in that** the adjustment mechanism (7) comprises an upper wedge element (12) and a lower wedge element (14) connected to a shaft (13), wherein the rotation of the shaft (13) causes the lower wedge element (14) to move along an axis (y) parallel to the impact strips (5) and thereby the upper wedge element (12) is adjustable along the displacement axis (z), wherein the upper wedge element (12) is guided on its underside
slides along an inclined upper surface (14a) of the lower wedge element (14).

4. Vibrating device (1) according to claim 3,
**characterized in that** the upper wedge (12) is connected to a fastening element (23b) of the fastening device (11) to displace the impact strips (5) along the displacement axis (z).

5. A vibrating device (1) according to claim 2,
**characterized in that** the adjustment mechanism (7) comprises a worm wheel (15) and a worm shaft (16), wherein the rotation of the worm shaft (16) allows the fastening device (11), which is connected to the worm wheel (15), to be adjusted along the displacement axis (z), wherein the worm wheel (15) is connected at its end face to the worm shaft (16).

6. A vibrating device (1) according to claim 2,
**characterized in that** the adjustment mechanism (7) comprises a spur gear (18) meshed with a spur gear shaft (17) and connected to the fastening device (11), wherein the fastening device (11) is adjustable along the displacement axis (z) by the rotation of the spur gear shaft (17).

7. A vibrating device (1) according to any one of claims 2-6,
**characterized in that** the adjustment device (6) comprises a torque transmission device (19) that indirectly connects the adjustment mechanisms (7) to the drive unit (20) via a mounting device (8) arranged to the side and/or below the vibrating table (2).

8. A vibrating device (1) according to claim 7,
**characterized in that** the torque transmission device (19) comprises a cardan shaft (22) which is suitable and intended for transmitting torque to the adjustment devices (6).

9. Vibrating device (1) according to claim 7,
**characterized in that** the torque transmission device (19) comprises a toothed belt (21) which is suitable and intended for transmitting torque to the adjustment devices (6).

10. A vibrating device (1) according to claim 7 or 9,
**characterized in that** the adjustment device comprises an angular gear mechanism that transmits the torque provided by the drive unit to the adjustment mechanism by an angle, wherein the angular gear mechanism is connected to the torque transmission device.

11. A vibrating device (1) according to any of the preceding claims,
**characterized in that** the vibrating device (1) is adjustable such that, in a rest state, the impact strips (5) are arranged below the vibrating table strips (4) or span a common plane.

12. A vibrating device (1) according to claim 2,
**characterized in that** the fastening device (11) comprises a first fastening element and a second fastening element, wherein the first fastening element has the shape of a milled cylinder and the second fastening element has the shape of a cuboid.

13. Concrete block manufacturing machine (28) for compacting a material to be compacted, wherein the concrete block manufacturing machine (28) comprises a vibrating device (1) according to the preceding claims.

## Revendications

1. Dispositif vibrant (1) comportant une table vibrante (2), pour une machine de fabrication de blocs de béton pour le compactage d'un matériau à compacter, dans lequel le dispositif vibrant (1) est monté au moins partiellement élastiquement et fixé à un châssis de machine (3) et est entraîné par au moins un moteur électrique et la table vibrante (2) peut ainsi être déplacée dans un mouvement de vibration principalement vertical, dans lequel le dispositif vibrant (1) présente plusieurs barres de table vibrante (4) disposées parallèlement les unes aux autres et fixées à la table vibrante (2) et des barres d'impact (5) fixées de manière statique au châssis de machine (3),
dans lequel les barres d'impact (5) peuvent être déplacées par rapport aux barres de table vibrante (4) et le long d'un axe de déplacement (z) s'étendant parallèlement au mouvement de vibration vertical par des dispositifs de réglage (6),
dans lequel le dispositif vibrant (1) présente deux dispositifs de réglage (6) par barre d'impact (5), lesquels sont respectivement disposés de manière à être montés aux extrémités opposées de la barre d'impact, dans lequel le dispositif vibrant (1) est conçu pour régler la surface de chaque barre d'impact (5) par les dispositifs de réglage (6) selon un angle d'inclinaison par rapport aux barres de table vibrante (4) orientées horizontalement,
**caractérisé en ce que** toutes les barres d'impact (5) peuvent être déplacées par rapport aux barres de table vibrante (4) et le long de l'axe de déplacement (z) par plusieurs dispositifs de réglage (6) entraînés par des unités d'entraînement (20) reliées entre elles, afin d'obtenir un déplacement de toutes les barres d'impact (5), **et en ce que** les dispositifs de réglage (6) sont entraînés individuellement par l'intermédiaire de plusieurs unités d'entraînement (20), dans lequel le nombre d'unités d'entraînement correspond au nombre de dispositifs de réglage (6).

2. Dispositif vibrant (1) selon la revendication 1,
**caractérisé en ce que**
toutes les barres d'impact (5) présentent une barre d'usure (10) reliée à une barre d'appui (9),
chaque dispositif de réglage (6) présente un dispositif de fixation (11) et un mécanisme de réglage (7), dans lequel la barre d'appui (9) est reliée au mécanisme de réglage (7) au moyen du dispositif de fixation (11).

3. Dispositif vibrant (1) selon la revendication 2,
**caractérisé en ce que**
le mécanisme de réglage (7) présente un élément formant coin supérieur (12) et un élément formant coin inférieur (14) relié à un arbre (13), dans lequel l'élément formant coin inférieur (14) peut être déplacé par la rotation de l'arbre (13) le long d'un axe (y) s'étendant parallèlement aux barres d'impact (5) et l'élément formant coin supérieur (12) peut ainsi être réglé le long de l'axe de déplacement (z), dans lequel l'élément formant coin supérieur (12) glisse côté inférieur le long d'une surface supérieure inclinée (14a) de l'élément formant coin inférieur (14).

4. Dispositif vibrant (1) selon la revendication 3,
**caractérisé en ce que**
le coin supérieur (12) est relié à un élément de fixation (23b) du dispositif de fixation (11) afin de déplacer les barres d'impact (5) le long de l'axe de déplacement (z).

5. Dispositif vibrant (1) selon la revendication 2,
**caractérisé en ce que**
le mécanisme de réglage (7) présente une roue hélicoïdale (15) et un arbre à vis sans fin (16), dans lequel le dispositif de fixation (11) relié à la roue hélicoïdale (15) peut être réglé par la rotation de l'arbre à vis sans fin (16) le long de l'axe de déplacement (z), dans lequel la roue hélicoïdale (15) est engrenée côté frontal avec l'arbre à vis sans fin (16).

6. Dispositif vibrant (1) selon la revendication 2,
**caractérisé en ce que**
le mécanisme de réglage (7) présente une roue cylindrique (18) engrenée avec un arbre de roue cylindrique (17) et reliée au dispositif de fixation (11), dans lequel le dispositif de fixation (11) peut être réglé le long de l'axe de déplacement (z) par la rotation de l'arbre de roue cylindrique (17).

7. Dispositif vibrant (1) selon l'une des revendications 2 à 6,
**caractérisé en ce que**
le dispositif de réglage (6) présente un dispositif de transmission de couple (19),
lequel relie indirectement les mécanismes de réglage (7) à l'unité d'entraînement (20) dans un appareil de retenue (8) disposé latéralement par rapport à la table vibrante (2) et/ou en dessous de celle-ci.

8. Dispositif vibrant (1) selon la revendication 7,
**caractérisé en ce que**
le dispositif de transmission de couple (19) présente un arbre à cardan (22) qui est apte et destiné à transmettre un couple aux dispositifs de réglage (6).

9. Dispositif vibrant (1) selon la revendication 7,
**caractérisé en ce que**
le dispositif de transmission de couple (19) présente une courroie dentée (21) qui est apte et destinée à transmettre un couple aux dispositifs de réglage (6).

10. Dispositif vibrant (1) selon la revendication 7 ou 9,
**caractérisé en ce que**
le dispositif de réglage présente un engrenage angulaire qui transmet le couple prédéfini par l'unité d'entraînement au mécanisme de réglage selon un angle, dans lequel l'engrenage angulaire est relié au dispositif de transmission de couple.

11. Dispositif vibrant (1) selon l'une des revendications précédentes,
**caractérisé en ce que**
le dispositif vibrant (1) peut être réglé de telle sorte que, dans un état de repos, les barres d'impact (5) sont disposées en dessous des barres de table vibrante (4) ou définissent un plan commun.

12. Dispositif vibrant (1) selon la revendication 2,
**caractérisé en ce que**
le dispositif de fixation (11) présente un premier élément de fixation et un second élément de fixation, dans lequel le premier élément de fixation présente la forme d'un cylindre fraisé et le second élément de fixation présente la forme d'un parallélépipède.

13. Machine de fabrication de blocs de béton (28) pour le compactage d'un matériau à compacter, dans laquelle la machine de fabrication de blocs de béton (28) présente un dispositif vibrant (1) selon l'une des revendications précédentes.
